# EUROPEAN PATENT APPLICATION

(11) **EP 4 446 389 A2**
(43) Date of publication of application: **16.10.2024**
(21) Application number: 24196467.5
(22) Date of filing: 11.12.2020
(51) Int. Cl.: C09D 133/16

(54) **USE OF A COATING MATERIAL ON THE EDGES OF DECORATIVE PANELS AND METHOD**

(30) Priority: 19.12.2019 BE 201905943
(62) Divisional of application: 20848967.4
(71) Applicant: Unilin, BV, 8710 Wielsbeke (BE)
(72) Inventor: Segaert, Martin, 8710 Wielsbeke (BE)
(74) Representative: Unilin Technologies

(57) **Abstract**

The use of a fluoroacrylate polymer to create a covering (23) or treatment of the edges of decorative panels (1). The invention further relates to a method for manufacturing decorative panels (1) in which the aforementioned polymer is used as a covering (23) or treatment.

## Description

The current invention relates to the use of a coating material on the edges of decorative panels, as well as a method for manufacturing panels, such as floor panels, on which such a coating material is used.

In particular, the invention relates to panels used to compose, for example, a floating floor covering. Such floor panels are for example known from the WO 97/47834 and may be provided with profiled edge areas on two opposite side edges which include milled coupling means fitting together which allow two such floor panels to be coupled together at the respective side edges, preferably without the use of glue. Potentially, the coupling means may be executed with some pre-tensioning, which means that the contour of the coupling means is made to some extent overlapping in such a way that, in a coupled condition, a tension originates which pushes the panels towards each other. Such pre-tensioning is interesting to counteract the formation of gaps after laying. This can also limit the penetration of dust and moisture. In some cases, the milling quality of the coupling means is insufficient to keep the seams permanently watertight. In addition, at the corner points of such panels there is an increased sensitivity to water intrusion. At the corners, the profiled edges of adjacent side edges intersect, and because of this it is possible that the milled coupling means may be absent or insufficient.

In the case of panels with a moisture-sensitive substrate and/or top layer, such as a substrate based on MDF or HDF (medium or high density fiberboard), the penetration of moisture into the seams of a floor covering composed of panels can lead to swellings and/or discolorations that becomes disturbingly visible on the decorative surface of such panels. Moreover, such swellings of the substrate in themselves can lead to accelerated wear of the floor surface. Furthermore, the penetration of moisture into the seams of a floor covering is problematic in itself, even if neither the substrate nor the top layer are moisture-sensitive. In such a case, water may collect under the floor covering and this can give rise to the formation of mold and its associated unpleasantness.

From WO 2008/078181 it is known to treat the side edges of a floor panel with an MDF or HDF substrate with a water-repellent substance that includes a fluorinated polymer or copolymer. The substance in question is applied to the side edge of the floor panel by means of a so-called vaccumate, e.g. of the type known from the DE 92 02 976 U1. The starting and stopping of such a vaccumate respectively at the entry and exit of the side edge from the vaccumate is difficult to fine-tune and may cause the angular points of the relevant side edge to be insufficiently covered with the relevant water-repellent substance.

The main purpose of the current invention is to offer an alternative coating material for the formation of a water-repellent or water-resistant coating on the edges of decorative panels, whereby, according to various preferred embodiments, a solution can be offered for one or more of the problems with the methods and/or panels from the state of the art.

The invention is, among other things, defined in the attached claims and relates to the use of a coating material, and to the a method wherein such coating material is applied.

Some preferred embodiments are described below, without being restrictive.

The use according to the current invention is preferably applied as a treatment for MDF or HDF (medium or high density fiberboard) edges of laminate flooring panels, for example to obtain a water-repellent or water-resistant effect.

The aforementioned coating material is preferably a fluoroacrylate polymer with the following formula: 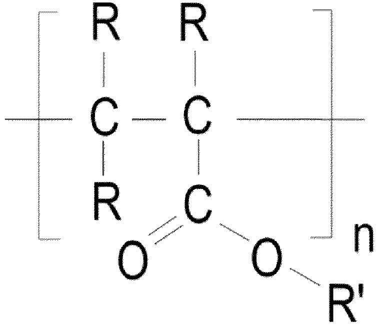 wherein one or more of the R groups are fluorine atoms, and the other R groups are hydrogen atoms. Herein, the R' group is preferably free of hydrogen atoms, and preferably chosen from the list consisting of Sodium, Potassium, CF3.

The aforementioned fluoroacrylate polymer preferably has the following formula:

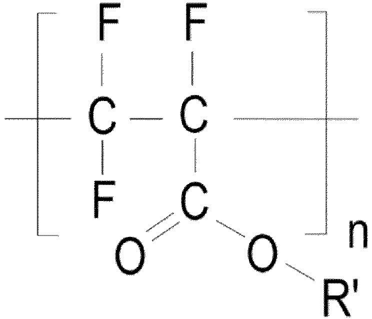

Wherein, preferably,y the R' group is free of hydrogen atoms, and preferably chosen from the list consisting of Sodium, Potassium, CF3. Preferably, the R' group is CF3.

It is therefore preferable to use a fluoroacrylate polymer. The acrylate is preferably a perfluorocarbon, which means that the C-atoms are saturated by F-atoms and no H-atoms are present anymore. As a result, the highest contact angle and water resistance is achieved.

Preferably, the potential mixture containing the fluoroacrylate polymer should be free of ethyl acetate. Ethyl acetate is highly flammable (flash point -3°C), which results in a safety risk.

Preferably, no flammable solvents are present in the mixture containing the fluoroacrylate polymer. This fact has a strong impact on fire safety. Since the solvents preferably have a flash point above 55°C, they can no longer be considered highly flammable or even flammable. However, the solvents, preferably at least isoalkanes, remain flammable.

Care is taken during application to ensure that the LEL (lower explosion level) concentration is not reached. This is achieved by extraction in the application environment at a sufficient flow rate.

The mixture preferably also contains a "cosolvent" (a glycol ether) that also acts as a wetting agent for the fluoroacrylate polymer in wood or wood-based panels, allowing it to penetrate deeper into, for example, the fiberboard, i.e. MDF or HDF, and, for example, is more easily absorbed by the wood.

Solvents based on isoalkanes and glycols, which may be present in the mixture, are non-toxic and consist of aliphatic compounds. However, care must be taken not to exceed the limits laid down by law. Due to the low evaporation value, the risk is virtually non-existent.

The application to the edges of the floor panel itself is initially done by means of a transfer technique by which the liquid is first applied to a wheel or roller and then transferred by the wheel or roller to the edge of the panel. This application method is similar to that described in WO 2006/038867. The solvent-based or water-based mixture may possibly have a low viscosity, so it is not easily taken up by the wheel and flows easily from the wheel back into the fluid reservoir. To improve this, an alkyd polymer is added that is also preferably dissolved in a non-aromatic solvent. This alkyd resin may or may not be urethane or isocyanate modified to promote water resistance. The advantage is threefold: in addition to the price advantage, the alkyd not only provides an increased viscosity but, especially in the case of a medium or long-chain resin, the penetration into the wood is less deep and can provide a first barrier due to its low dispersion. The resin forms an external film, while the fluorine is more likely to provide impregnation protection. As a relatively thin layer is applied, the coating does not need to be dried to meet current ecological standards (AgbB, etc.).

Next to the transfer application, a spray application can also be applied. The advantage of such an application is that a higher layer thickness can be achieved, which improves water resistance.

In addition to the quantity applied, the following parameters are also important for achieving good water-repellent properties:
- The squareness of the panels
- The pre-tensioning between the panels, for example achieved through the technique known per se from WO'97/47834, i.e. the technique wherein the contours of the coupling means are made overlapping at two opposite edges of the panel in such a way that, in the coupled condition, part of the coupling is bent and, as a result of its elastic returning force, pushes the edges towards each other. Preferably, this concerns an elastic bending of a groove lip, e.g. the lower groove lip, in a tongue-and-groove connection with interlocking elements.
- The milling quality with which the edges of the panels are finished.

Suitable colorants may be added to the coating in order to cover up the white lines created during milling, e.g. from the melamine layers in the case of laminate panels. These colorants have no influence on water resistance. For this purpose they preferably do not consist of solid particles such as pigments, but rather of liquid colorants.

As the application preferably takes place on the click connection, in other words on the mechanical coupling means, no UV degradation of the coating can occur, resulting in a long service life.

Preferably, the use according to the current invention is applied to a decorative panel with a substrate with a decorative top layer applied to it.

Preferably, the substrate consists mainly of an MDF or HDF board (medium or high density fiberboard), preferably with an average density of more than 800 kilograms per cubic meter. Preferably it involves an HDF board of the type which shows a locally higher density at both surfaces, so-called peak density, which amounts to at least 110% of the average density. It is clear that in such a case, the more centrally located HDF material has a density that is lower than the average density and, for instance, has a density lower than 90% of this average density. Preferably, said substrate has a density higher than 900 kilograms per cubic meter at the actual substrate surface. In the case of an HDF board with a peak density of at least 110% of the average density, said lower edge area extends preferably deeper than the zone with said peak density, that is preferably into a zone with a density corresponding to the average density of the board concerned or less. The presence of the higher density near the surface of the substrate, preferably at least on that side of the substrate that has the decorative top layer, leads to an increased resistance to the occurrence of effects visible on the surface due to the penetration of moisture into the substrate. For example, a zone of higher density will have a minimizing effect on possible swelling effects of the substrate material that can lead to raised edges, resulting in accelerated wear of the top surface in the vicinity of those edges.

Preferably, the decorative top layer is a laminate formed on the basis of melamine resin or other thermosetting resin, and possibly one or more paper sheets. The laminate preferably includes at least one printed and resin-provided paper sheet, with preferably on top a resin-provided transparent or translucent paper sheet. The laminate may further include wear-resistant particles located above the print. Preferably, the laminate is bonded to the substrate material without additional intermediate glue or resin layers, both on the actual top surface and on the lower edge area. The laminate is preferably a laminate of the type DPL ("Direct Pressure Laminate"). A special feature of a DPL technique is that the laminate layer is formed by consolidating at least one decorative paper and one or more layers of synthetic material, whether or not provided on the decorative paper, for example by means of an impregnation technique. The synthetic material is a thermally setting material, such as melamine resin. Consolidation involves at least a setting or corsslinking of the thermally setting synthetic material. At the same time, namely using one and the same pressing operation, this laminate layer is attached to the substrate. For the most common DPL panels, the laminate layer is composed of a thermosetting resin-provided decorative paper with a transparent layer applied on top that contains thermosetting resin, also called overlay. Preferably, a resin layer, for instance at least one resin-soaked paper sheet, is provided at the bottom of the substrate material during the same pressing operation. This is used as a balancing layer for any tensile stresses in the laminate layer on the top surface, sucht that a stable, pressed whole can be achieved.

Other possibilities for the substrate are, for example, a thermoplastic substrate, for example based on PVC and fillers, or a mineral-based substrate, for example based on cement such as Portland cement or magnesium oxide, which may also include fillers.

Other possibilities for the decorative top layer are decorative top layers which comprise a printed plastic film, or which include a print directly formed on the substrate, or which include a natural material, such as a wood veneer.

Preferably, said panel is a floor panel, preferably of the type that can be used to create a floating flooring system. According to the most preferred embodiment, the floor panel is a laminate floor panel with a substrate made of MDF or HDF and a decorative top layer of laminate as described above. According to variants, the floor panel is an LVT, SPC or WPC floor panel, namely a floor panel with a thermoplastic substrate and a decorative top layer with a printed plastic film or a print directly formed on the substrate.

Preferably, the panels in question are provided with coupling means on at least two sides which extend perpendicular to one another and which allow two such panels to be joined together.

According to the most preferred embodiment, the aforementioned panel is rectangular and elongated.

Preferably, the method of the invention is used for the production of panels, more specifically floor panels, with an MDF or HDF substrate and a decorative top layer of laminate applied to it, wherein the panel at at least two opposite panel edges is provided with a lower edge area in the upper surface, wherein the aforementioned top layer extends uninterruptedly from the actual top surface, over the surface of the lower edge area, up to the edge of the top surface. Preferably, a panel obtained by the method of the present invention at least has a lower edge area in the upper surface at a pair of long edges, preferably in the form of a straight or curved chamfer. Preferably, this involves a so-called pressed-in chamfer, that is a chamfer obtained during the same pressing operation applied to realize the DPL laminate layer on the surface of the substrate.

With a view to better demonstrating the characteristics of the invention, the following, as an example without any restrictive character, describes some preferred embodiments, with reference to the accompanying drawings, wherein:
Figure 1 a floor panel obtained according to the use and method of the invention;
figure 2 shows this floor panel in a cross-section according to line II-II shown in figure 1;
figure 3 for a variant on a larger scale shows the area indicated by F3 in figure 2; and
figure 4 shows a variant in a similar view.

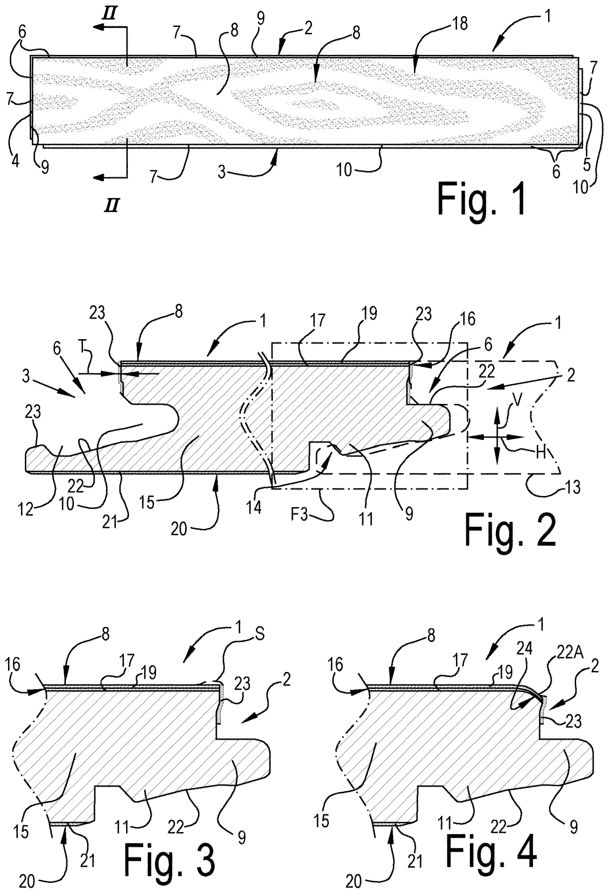

Figure 1 shows an oblong rectangular floor panel 1 which at two pairs of opposite side edges, 2-3 and 4-5, is provided with profiled edge areas 6 which include mechanical coupling parts 7.

Figure 2 shows that the used coupling parts 7 allow an interlocking of two such floor panels 1 both in a horizontal direction H as well as in a vertical direction V For the interlocking in vertical direction V, which is in a direction perpendicular to the top side 8 of the floor panel 1, the coupling parts 7 shown here are mainly in the form of a tongue 9 and a groove 10. Interlocking in the horizontal direction H, i.e. in a direction perpendicular to the vertical direction V referred to above and in the plane of figure 2, is obtained, in this case, by means of locking elements in the form of a protrusion 11 on the underside of the tongue 9 and a recess 12 in the lower lip of the groove 10. Upon coupling two such floor panels 1, the locking elements 11-12 cooperate and prevent the floor panels 1 from moving apart. This is shown by the floor panel 1 shown in dashed line 13, where it is clearly visible that there may be an overlap 14 between the not coupled contours of the groove 10 and the tongue 9, more specifically between the contours of the respective locking elements 11-12. By means of such an overlap 14, a so-called pre-tensioning can be achieved when two floor panels are coupled. The concept of pre-tensioning is in itself known from WO 97/47834. Preferably, the used mechanical coupling parts 7 will result in an interlocking free from play of two such floor panels in the aforementioned horizontal direction H and vertical direction V and better still, the coupling parts 7 will result in an interlocking free from play in all directions in the plane determined by the aforementioned directions V and H.

It is clear that the floor panels 1 obtained in the context of the invention may have any shape, such as a rectangular, square, hexagonal or similar shape, as well as may be provided with any coupling parts 7.

The floor panel 1 shown in figures 1 and 2 is a laminate floor panel 1 containing a substrate 15, wherein this substrate 15 consists entirely of a wood-based material such as MDF or HDF. In addition, the aforementioned coupling parts 7 are executed in one-piece with this substrate 15. The floor panel 1 also contains a decorative top layer 16 based on synthetic material. In this case, the decorative top layer 16 is a so-called "DPL" layer which, in this example, consists of a decorative layer 17 with a printed motif 18 and a wear-resistant layer 19 applied to it, such as a so-called overlay. Both the decorative layer 17 and the overlay 19 contain a paper layer soaked in resin. Herein, the overlay also contains wear-resistant particles such as corundum. On its underside 20, the floor panel 1 has a counter layer 21 which also contains a layer of paper soaked in resin.

At least part of the surface 22 of the profiled edge areas 6 is provided with a covering 23 in which fluoroacrylate polymer is used according to the invention.

Figure 2 shows that the covering 23 or treatment here forms a layer or film with a certain thickness T. In this figure as well as in figures 3 and 4 discussed below, this layer is schematically shown as a layer lying on top of surface 22 of the profiled edge areas 6. It is clear that in reality this layer may have penetrated to a greater or lesser extent, or even completely, into the surface area 22 of the relevant edge area 6. It is clear that it is preferably taken care off that the thickness T of the layer on top of the surface 22 is limited to a minimum thickness T, e.g. by applying a suitable dilution to better absorb the covering 23 or treatment into substrate 15. In this way, it does not constitute a major obstacle when connecting the relevant edges 2-3 to a similar floor panel 1. It is noted that the thickness T of the film is shown in an exaggerated manner. In reality, the thickness T may be in the micron range or be non-existent.

Figure 3 shows a variant wherein the covering 23 covers the transition between substrate 15 and the decorative top layer 16 as well as a limited band below the top edge of the floor panel 1. The use of fluoroacrylate polymer, according to the current invention, in a band-shaped covering 23 is very useful for classic laminate floor panels or other floor panels that are not specifically intended for use in damp rooms. After all, with classic laminate flooring panels there is the disadvantage that when cleaning with a damp cloth, moisture is absorbed into the substrate, causing it to swell and the laminate top layer to be pressed up permanently near the edges of the floor panels. Because a particularly efficient seal can now be achieved by means of the aforementioned active substances, it is no longer possible for moisture to penetrate directly underneath the laminate top layer into the substrate, by which the aforementioned effect is eliminated, if not minimized.

In dashed line S it is shown in figure 3 that the covering 23 can also extend to the top surface 8 of the floor panel 1. In general, the aim is for the covering 23 to cover at least the transition between substrate 15 and the top layer 16.

Figure 4 shows a variant in which the profiled edge areas 6 include at least a surface 22A which is formed as a lower edge area 24 or chamfer, in this case as a bevelled edge. As shown, the covering 23 can also be provided on surface 22A of this lower edge area 24. In the example shown, the decorative top layer 16 extends continuously from the top surface 8 of the floor panel 1 over the surface 22A of the lower edge area 24.

It is clear that in the examples given in figures 2 to 4, the undisplayed groove side 3-5 of the floor panel 1 has preferably undergone a similar treatment.

Generally speaking, it should also be noted that indicating means may be incorporated into the covering 23 to be able to check that it has been applied in a completely covering manner to the desired surface. Such indicating means may consist of a dye or a substance which, for example, lights up when irradiated with light or the like.

The current invention also relates to the following list of items:
1. The use of a fluoroacrylate polymer to achieve a covering (23) or treatment at the side edges of decorative panels (1).
2. The use according to item 1, characterized in that the aforementioned fluoroacrylate polymer has the following formula: 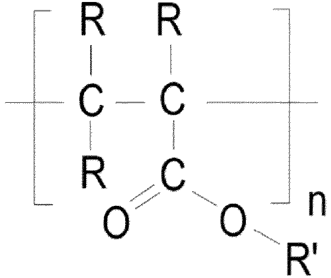 wherein one or more of the R groups are fluorine atoms, and the other R groups are hydrogen atoms.
3. The use according to item 1, characterized in that the aforementioned fluoroacrylate has the following formula: 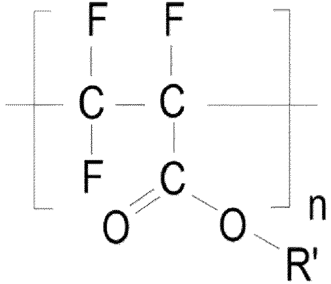 wherein, preferably, the R' group is free of hydrogen atoms, and preferably chosen from the list consisting of Sodium, Potassium, CF3.
4. The use according to any of the preceding items, characterized in that the aforementioned fluoroacrylate polymer is part of a solvent-based mixture, or, alternatively, of a water-based mixture.
5. The use according to item 4, characterized in that the aforementioned solvent-based mixture has a flash point of 35°C or more, preferably of 55°C or more.
6.- The use according to item 4 or 5, characterized in that the aforementioned solvent-based mixture includes alkanes, preferably isoalkanes, as solvents.
7. The use according to any of items 4 to 6, characterized in that the solvents and additives in the aforementioned solvent-based mixture are exclusively of the aliphatic type, or, that the proportion of solvent and additive of the aromatic type in the mixture is less than 1000 ppm, or, less than 100 ppm.
8. The use according to any of the preceding items, characterized in that the aforementioned fluoroacrylate polymer is part of a mixture containing at least glycol ether or another wetting agent, or surface tension reducing agent.
9. The use according to any of the preceding items, characterized in that the aforementioned fluoroacrylate polymer is part of a mixture containing at least alkyd resin, wherein the aforementioned alkyd resin is preferably modified urethane or isocyanate.
10. The use according to any of the preceding items, characterized in that the aforementioned fluoroacrylate polymer is part of a mixture containing at least a colorant, preferably a liquid colorant, or at least a colorant free from solid pigments.
11. Method for manufacturing decorative panels, characterized in that the method includes the step of applying a covering (23) or treatment on at least part of one side edge of the aforementioned panels (1), wherein the aforementioned covering (23) or treatment includes fluoroacrylate polymer, preferably as defined by any of the preceding items.
12. Method according to item 11, characterized in that this method is used for the production of panels (1) with at least two opposite side edges (2-3) comprising coupling means (7), which allow two such panels (1) to be coupled at the relevant side edges (2-3), wherein, in the coupled condition, an interlocking comes into existence in a direction (V) normal to the plane of the coupled panels (1) and/or an interlocking in a direction (H) in the plane of the panels (1) and normal to the coupled side edges (2-3).
13. Method according to item 11 or 12, characterized in that the aforementioned decorative panels (1) are floor panels chosen from the list consisting of:
   - floor panels with a porous or moisture-absorbing substrate (15), e.g. MDF, HDF, MgO, cement fiberboard, foamed substrates, e.g. thermoplastic foamed substrates;
   - floor panels with a decorative top layer (16), including a print, whereby the decorative top layer (16) is directly or indirectly fixed to an underlying substrate (15);
   - floor panels with a decorative top layer (16) comprising a wood veneer (thickness < 2.5 mm) or a layer of wood (thickness from 2.5 mm), with any wood veneer preferably having a thickness of 0.4 to 0.8 mm; and
   - floor panels for composing a floating floor covering, preferably with an MDF or HDF substrate (15), or with a thermoplastic substrate (15).

The current invention is by no means limited to the embodiments described above, but similar methods for manufacturing panels may be realized without exceeding the scope of the invention.

## Claims

1. The use of a coating material comprising fluoroacrylate polymer to achieve a covering (23) or treatment at the side edges of decorative panels (1), wherein the coating material is a solvent-based mixture having a flash point of 35°C or more, preferably of 55°C or more.

2. The use according to claim 1, wherein the coating material contains at least alkyd resin, wherein the aforementioned alkyd resin is preferably modified urethane or isocyanate.

3. The use according to claim 1 or 2, wherein the coating material contains at least glycol ether or another wetting agent, or surface tension reducing agent.

4. - The use according to any of the preceding claims, wherein the use is applied as a treatment for MDF or HDF (medium or high density fiberboard) edges of laminate flooring panels, to obtain a water-repellent or water-resistant effect.

5. The use according to any of the preceding claims, wherein the coating material includes glycols and/or alkanes, preferably isoalkanes, as solvents.

6. - The use according to any of the preceding claims, wherein the solvents and possible additives in the coating material are exclusively of the aliphatic type, or, that the proportion of solvent and additive of the aromatic type in the mixture is less than 1000 ppm, or, less than 100 ppm.

7. The use according to any of the preceding claims, wherein the coating material contains at least a colorant, preferably a liquid colorant, or at least a colorant free from solid pigments.

8. Method for manufacturing decorative panels, **characterized in that** the method includes the step of applying a coating material on at least part of one side edge of the aforementioned panels (1), wherein said coating material is the coating material as defined in any of the preceding claims.

9. Method according to claim 8, wherein this method is used for the production of panels (1) with at least two opposite side edges (2-3) comprising coupling means (7), which allow two such panels (1) to be coupled at the relevant side edges (2-3), wherein, in the coupled condition, an interlocking comes into existence in a direction (V) normal to the plane of the coupled panels (1) and/or an interlocking in a direction (H) in the plane of the panels (1) and normal to the coupled side edges (2-3).

10. Method according to claim 8 or 9, wherein the aforementioned decorative panels (1) are floor panels with a porous or moisture-absorbing substrate (15), such as MDF or HDF, and a decorative top layer (16), including a print, whereby the decorative top layer (16) is directly or indirectly fixed to the underlying substrate (15).

11. Method according to claim 10, wherein the coating material covers at least the transition between substrate (15) and the decorative top layer (16).

12. Method according to claim 10 or 11, wherein the substrate (15) is an HDF board with an average density of more than 800 kilograms per cubic meter and with a locally higher density at both surfaces, so-called peak density, which amounts to at least 110% of the average density.

13. Method according to any of the preceding claims 8 to 12, wherein the aforementioned decorative panels (1) are floor panels with an MDF or HDF substrate and a decorative top layer of laminate applied to it, wherein the panel at at least two opposite panel edges is provided with a lower edge area in the upper surface, wherein the aforementioned top layer extends uninterruptedly from the actual top surface, over the surface of the lower edge area, up to the edge of the top surface.

14. Method according to any of the preceding claims 8 to 13, wherein the coating material is applied by means of a transfer technique by which the liquid is first applied to a wheel or roller and then transferred by the wheel or roller to the edge of the panel (1).

15. Method according to any of the preceding claims 8 to 13, wherein a spray application used to apply the coating material.
